# EUROPÄISCHE PATENTANMELDUNG

(11) **EP 4 613 998 A1**
(43) Veröffentlichungstag der Anmeldung: **10.09.2025**
(21) Anmeldenummer: 24162321.4
(22) Anmeldetag: 08.03.2024
(51) Int. Cl.: F02M 21/02, F17C 13/08, F16L 41/03, H01M 8/04089

(54) **VERTEILER, H2-HOCHDRUCKSYSTEM UND VERFAHREN ZUR HERSTELLUNG EINES VERTEILERS**

(71) Anmelder: Robert Bosch GmbH, 70442 Stuttgart (DE)
(72) Erfinder: Behounek, Martin, 58606 Jihlava Vysocina (CZ); Kunkela, Ondrej, 58606 Jihlava Vysocina (CZ)

(57) **Zusammenfassung**

Verteiler (110) für ein H2-Hochdrucksystem (100), wobei der Verteiler (110) einen Hauptkörper (120) mit einer Anzahl von radialen Schnittstellen (124) zum Verbinden des Verteilers (110) mit einer Betankungsinfrastruktur (150) und/oder dem H2-Hochdrucksystem (100) umfasst, wobei die mehreren Schnittstellen (124) miteinander verbunden sind, um Fluid über eine Hauptbohrung (125) entlang des Hauptkörpers (120) zu verteilen, wobei mindestens eine der mehreren radialen Schnittstellen (124) ein Verbindungselement (126) zum Verbinden der betreffenden radialen Schnittstelle (124) mit einer Betankungsinfrastruktur (150) und/oder dem H2-Hochdrucksystem (100) umfasst, wobei das mindestens eine Verbindungselement (126) ein Außengewinde (128) und ein Ausdehnungselement (130), um zu ermöglichen, dass sich das Verbindungselement (126) radial ausdehnt, umfasst.

## Beschreibung

### Stand der Technik

Bekannte Verteiler für Hochdrucksysteme für Wasserstoff umfassen verschiedene Strukturen mit einem oder mehreren Einlässen und einer Anzahl von Auslässen zur Verteilung des Wasserstoffs. Die bekannten Verteiler für Hochdrucksysteme für Wasserstoff sind bis 700 bar und in Zukunft sogar noch höher ausgelegt. Die Verwendung der Verteiler mit einem Gas wie Wasserstoff erfordert eine wohlüberlegte Wahl des Materials für die Verteiler.

Die bekannten Verteiler umfassen radiale Schnittstellen zum Verbinden des Verteilers mit einer Betankungsinfrastruktur, Tanks und/oder anderen Einheiten eines H2-Hochdrucksystems. Typischerweise werden Rohre verwendet, um den Verteiler mit den anderen Einheiten des H2-Hochdrucksystems zu verbinden. Die Rohre werden in die radialen Schnittstellen eingeschoben und durch Sicherungsmittel gesichert. Ein bekanntes Verfahren zum Sichern von Rohren an den radialen Schnittstellen eines Verteilers umfasst das Aufschrauben von Sicherungsmitteln wie Kupplungsmuttern auf Gewinde der radialen Schnittstellen. Durch das Hineinschieben der Rohre in die radialen Schnittstellen werden die Gewinde der radialen Schnittstellen tendenziell in einer radialen Richtung nach außen gedrückt. Diese Verformung verursacht Probleme für den Anschluss der Rohre an den Verteiler. Die Gewinde können verformt werden, wenn die Verbindung erzwungen wird und/oder die Verbindung infolge der Verformung der Schnittstellen keine einfache, sichere, wiederholbare und/oder zuverlässige Verbindung ermöglicht.

### Offenbarung der Erfindung

Die Erfindung beansprucht einen Verteiler für ein H2-Hochdrucksystem mit den Merkmalen des unabhängigen Anspruchs 1. Ferner offenbart die Erfindung ein H2-Hochdrucksystem mit mindestens einem Verteiler mit den Merkmalen des unabhängigen Anspruchs 10 sowie ein Verfahren zur Herstellung eines Verteilers für ein H2-Hochdrucksystem. Weitere Vorteile und Einzelheiten der Erfindung ergeben sich aus den abhängigen Ansprüchen, der Beschreibung und den Zeichnungen. In diesem Zusammenhang gelten in Bezug auf den erfindungsgemäßen Verteiler beschriebene Merkmale natürlich jeweils auch in Bezug auf das H2-Hochdrucksystem und das erfindungsgemäße Verfahren und umgekehrt, so dass hinsichtlich der Offenbarung betreffs der einzelnen Aspekte der Erfindung stets eine wechselseitige Bezugnahme erfolgt oder erfolgen kann.

Gemäß einem ersten Aspekt der Erfindung offenbart die Erfindung einen Verteiler für ein H2-Hochdrucksystem. Der Verteiler umfasst einen Hauptkörper mit einer Anzahl von radialen und/oder axialen Schnittstellen zum Verbinden des Verteilers mit einer Betankungsinfrastruktur und/oder dem H2-Hochdrucksystem. Die mehreren Schnittstellen sind miteinander verbunden, um Fluid oder Gas über eine Hauptbohrung entlang des Hauptkörpers zu verteilen, wobei mindestens eine der mehreren Schnittstellen ein Verbindungselement zum Verbinden der betreffenden Schnittstelle mit einer Betankungsinfrastruktur und/oder dem H2-Hochdrucksystem umfasst, wobei das mindestens eine Verbindungselement ein Außengewinde und ein Ausdehnungselement, um zu ermöglichen, dass sich das Verbindungselement radial ausdehnt, umfasst.

Der Verteiler weist im Allgemeinen vorzugsweise eine rohrähnliche Form und/oder eine zylindrische Form auf. Die Hauptfunktion des Verteilers besteht darin, Wasserstoff unter Verwendung axialer und/oder radialer Schnittstellen im System zu verteilen. Die axialen und radialen Schnittstellen sind hinsichtlich der Funktion als Eingangs- und/oder Ausgangsschnittstellen vorzugsweise austauschbar. Die radialen Schnittstellen erstrecken sich radial vom Hauptkörper aus. Vorzugsweise erstrecken sich die mehreren radialen Schnittstellen vom Hauptkörper aus parallel zueinander und/oder in einer Linie miteinander.

Der Verteiler umfasst vorzugsweise mindestens eine Eingangsschnittstelle, während die übrigen Schnittstellen vorzugsweise als Ausgangsschnittstellen verwendet werden und/oder verschlossen sind, zum Beispiel durch eine Verschlussschraube.

Mindestens eine der Schnittstellen, vorzugsweise einige der Schnittstellen oder alle umfassen jeweils ein Verbindungselement zum Verbinden der jeweiligen Schnittstelle mit einer Betankungsinfrastruktur und/oder dem H2-Hochdrucksystem. Vorzugsweise sind die Verbindungsmittel identisch gestaltet. Das mindestens eine Verbindungselement umfasst ein Außengewinde und ein Ausdehnungselement, um zu ermöglichen, dass sich das Verbindungselement radial ausdehnt. Die radiale Ausdehnung ist vorzugsweise als eine Verbiegung des Verbindungselements in Reaktion auf das Hineinschieben eines Rohres in die betreffende Schnittstelle zu verstehen.

Im Rahmen der Erfindung ist es wichtig anzumerken, dass die Richtungen beschreibenden Begriffe "radial" und "axial" ihre Ausrichtung in Abhängigkeit von ihrer jeweiligen Beziehung zu den Merkmalen des Verteilers ändern. Wie zuvor beschrieben, werden die Schnittstellen im Hinblick auf den Hauptkörper des Verteilers beschrieben. Die Ausdehnung des Verbindungselements wird im Hinblick auf die jeweilige Schnittstelle beschrieben.

Vorteilhafte Beispiele der Gestaltung des Ausdehnungselements werden in den folgenden Abschnitten detailliert beschrieben. Das Ausdehnungselement ist vorzugsweise als Mittel zu verstehen, um zu ermöglichen, dass das Verbindungselement wenigstens teilweise radial ausgedehnt und/oder abgelenkt wird, während es noch immer in der Lage ist, die Verbindung mit einer Betankungsinfrastruktur und/oder dem H2-Hochdrucksystem herzustellen. Beispielsweise werden das Verbindungselement und das Außengewinde durch ein Rohr, das in die Schnittstelle hineingeschoben wird, radial nach außen verformt. Die Verformung des Verbindungselements und des Außengewindes würde dazu führen, dass die Verbindung nicht wie beabsichtigt funktioniert. Das erfindungsgemäße Ausdehnungselement ermöglicht, dass sich das Verbindungselement und das Außengewinde radial ausdehnen, während das Verbindungselement in der Lage ist, die Verbindung mit einer Betankungsinfrastruktur und/oder dem H2-Hochdrucksystem wie beabsichtigt herzustellen.

Vorzugsweise wird das Ausdehnungselement erzeugt, indem die ersten paar Gewindegänge des Außengewindes weggeschnitten werden, wodurch die Verformung des Verbindungselements und/oder des verbleibenden Außengewindes minimiert wird und/oder die Funktionsfähigkeit der Verbindung des Verbindungselements nicht beeinflusst.

Vorzugsweise ermöglicht das mindestens eine Ausdehnungselement eine plastische Verformung des Verbindungselements und/oder des Außengewindes, indem es Toleranzspalte bereitstellt, was einen ausreichenden Spielraum zwischen dem Ausdehnungselement und der Mutter garantiert und die funktionsfähige Verbindung des Verbindungselements mit der Betankungsinfrastruktur und/oder dem H2-Hochdrucksystem sicherstellt.

Der Verteiler umfasst den Hauptkörper, welcher vorzugsweise als ein einziges Materialstück verstanden wird. Unter dem Hauptkörper wird vorzugsweise ein geradliniger Hauptkörper und/oder ein Hauptkörper entlang einer virtuellen Achse verstanden. Die axialen Schnittstellen des Verteilers sind vorzugsweise mit der virtuellen Achse des Hauptkörpers fluchtend angeordnet. Die radialen Schnittstellen sind vorzugsweise radial bezüglich der virtuellen Achse des Hauptkörpers angeordnet. Der Verteiler umfasst vorzugsweise nur zwei, nur eine einzige oder keine axiale Schnittstelle. Der Verteiler umfasst vorzugsweise eine Anzahl von radialen Schnittstellen, vorzugsweise mindestens eine oder mehr.

Der Hauptkörper umfasst weiterhin eine Hauptbohrung entlang des Hauptkörpers. Das Fluid oder Gas wird über die Hauptbohrung entlang des Hauptkörpers auf die Schnittstellen verteilt. Unter der Hauptbohrung wird vorzugsweise ein aufgebohrter, gebohrter und/oder anderweitig bearbeiteter Hohlraum entlang des Hauptkörpers verstanden. Das H2-Hochdrucksystem umfasst vorzugsweise mindestens einen Tank für Wasserstoff und/oder mindestens ein Verbrauchermittel für Wasserstoff, zum Beispiel einen Motor und/oder eine Antriebseinheit eines Fahrzeugs. Unter der Betankungsinfrastruktur wird vorzugsweise eine Art von Tankstelle, eine stationäre oder mobile Tankeinheit und/oder eine andere Quelle von Kraftstoff, vorzugsweise Wasserstoff, verstanden.

Ein derart gestalteter Verteiler ist besonders vorteilhaft, da der Verteiler, insbesondere die Gestaltung des mindestens einen Verbindungselements, eine vorteilhafte Verbindung des Verteilers mit einer Betankungsinfrastruktur und/oder dem H2-Hochdrucksystem ermöglicht. Die Gestaltung des mindestens einen Verbindungselements, insbesondere das Ausdehnungselement, ermöglicht eine radiale Ausdehnung des Verbindungselements, ohne die Funktion der jeweiligen Schnittstelle zur Verbindung mit einer Betankungsinfrastruktur und/oder dem H2-Hochdrucksystem zu beeinträchtigen. Durch die Gestaltung des Verbindungselements kann die Materialdicke für die jeweilige Schnittstelle verringert werden, da das Ausdehnungselement ermöglicht, dass sich das Verbindungselement radial ausdehnt, wodurch ein verringerter Materialeinsatz und damit eine Kostensenkung durch den Verteiler auf besonders einfache Weise ermöglicht wird. Der erfindungsgemäße Verteiler benötigt wenig Platz und gewährleistet eine gut funktionierende und zuverlässige Verbindung mit H2-Hochdrucksystemen. Aufgrund der Gestaltung des Verbindungselements wird eine wiederholte Montage des Verteilers ermöglicht.

Gemäß einer vorteilhaften Ausgestaltung der Erfindung wird ein Verteiler bereitgestellt, wobei das Ausdehnungselement an einem freien Ende der mindestens einen Schnittstelle und/oder des jeweiligen Außengewindes angeordnet ist. Die Auswirkung einer Verformung des Ausdehnungselements infolge des Einsetzens und/oder Einschiebens eines Rohres in die mindestens eine Schnittstelle ist am freien Ende der mindestens einen Schnittstelle und/oder des jeweiligen Außengewindes am größten. Die mindestens eine Schnittstelle und/oder das jeweilige Außengewinde wird am freien Ende der mindestens einen Schnittstelle und/oder des jeweiligen Außengewindes am stärksten verformt. Dadurch ermöglicht das Vorsehen des Ausdehnungselements am freien Ende der mindestens einen Schnittstelle und/oder des jeweiligen Außengewindes eine vorteilhafte radiale Ausdehnung, während die Verbindungsfunktion der Schnittstelle nicht oder wenigstens nicht wesentlich beeinträchtigt wird. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das Ausdehnungselement ermöglicht, dass sich das Verbindungselement radial ausdehnt, während eine sichere und wiederholbare Verbindung auf eine besonders einfache Weise bereitgestellt wird.

Gemäß einer vorteilhaften Ausgestaltung der Erfindung wird ein Verteiler bereitgestellt, wobei das Ausdehnungselement als zylindrischer Vorsprung von der mindestens einen Schnittstelle und/oder dem jeweiligen Außengewinde gestaltet ist. Wie zuvor beschrieben, wird das Ausdehnungselement vorzugsweise durch Wegschneiden mindestens eines ersten Gewindeganges oder von ein paar Gewindegängen am freien Ende der mindestens einen Schnittstelle und/oder des jeweiligen Außengewindes erzeugt. Vorzugsweise ist das Ausdehnungselement als zylindrischer Vorsprung von der mindestens einen Schnittstelle und/oder dem jeweiligen Außengewinde gestaltet. Eine radiale Verbiegung des zylindrischen Vorsprungs wirkt sich vorzugsweise nicht auf die Verbindungsfunktion aus. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das als zylindrischer Vorsprung gestaltete Ausdehnungselement ermöglicht, dass sich das Verbindungselement radial ausdehnt, während das Außengewinde eine sichere und wiederholbare Verbindung auf eine besonders einfache Weise gewährleistet.

Gemäß einer vorteilhaften Ausgestaltung der Erfindung wird ein Verteiler bereitgestellt, wobei das Ausdehnungselement durch Wegschneiden mindestens eines ersten Gewindeganges des mindestens einen Außengewindes gestaltet ist. Wie zuvor beschrieben, wird das Ausdehnungselement vorzugsweise durch Wegschneiden mindestens eines ersten Gewindeganges oder von ein paar Gewindegängen am freien Ende der mindestens einen Schnittstelle und/oder des jeweiligen Außengewindes erzeugt. Der weggeschnittene Gewindegang ermöglicht eine radiale Verbiegung des Ausdehnungselements im Bereich des weggeschnittenen Gewindeganges, während der verbleibende Abschnitt des Verbindungselements für strukturelle Festigkeit der jeweiligen Schnittstelle sorgt. Dadurch wirkt sich das weggeschnittene Gewinde vorteilhaft auf die Verbindungsfunktion aus, indem Zwischenräume für eine radiale Ausdehnung des Verbindungselements erzeugt werden. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das Ausdehnungselement mit mindestens einem weggeschnittenen Gewindegang ermöglicht, dass sich das Verbindungselement radial ausdehnt, während das verbleibende Außengewinde eine sichere und wiederholbare Verbindung auf eine besonders einfache Weise gewährleistet.

Gemäß einer vorteilhaften Ausgestaltung der Erfindung wird ein Verteiler bereitgestellt, wobei das Ausdehnungselement einstückig mit der mindestens einen Schnittstelle und/oder dem Verteiler ausgebildet ist. Vorzugsweise sind der Hauptkörper und/oder der gesamte Verteiler einstückig mit dem Ausdehnungselement und/oder der mindestens einen Schnittstelle ausgebildet. Das Gestalten wenigstens von Teilen des Verteilers als ein einziges Materialstück erhöht vorteilhafterweise die strukturelle Festigkeit des Verteilers, während Materialmengen, Kosten und die Größe des Verteilers verringert werden. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das Ausdehnungselement ermöglicht, dass sich das Verbindungselement radial ausdehnt, während das verbleibende Außengewinde eine sichere und wiederholbare Verbindung auf eine besonders einfache Weise gewährleistet.

Gemäß einer vorteilhaften Ausgestaltung der Erfindung wird ein Verteiler bereitgestellt, wobei die mindestens eine Schnittstelle, insbesondere das jeweilige Verbindungselement, einen Innendurchmesser aufweist und die mindestens eine Schnittstelle, insbesondere das jeweilige Verbindungselement und/oder das jeweilige Außengewinde, einen Außendurchmesser aufweist, wobei für das Verhältnis des Innendurchmessers zum Außendurchmesser ein Faktor von 0,20 bis 0,5 gilt. Unter dem Innendurchmesser wird vorzugsweise ein Durchmesser eines Strömungsweges innerhalb der Schnittstelle verstanden, während unter dem Außendurchmesser vorzugsweise ein Außendurchmesser des jeweiligen Verbindungselements und/oder des jeweiligen Außengewindes verstanden wird. Der oben beschriebene Faktor definiert eine Wanddicke der mindestens einen Schnittstelle, insbesondere des jeweiligen Verbindungselements. Eine Wanddicke entsprechend dem oben beschriebenen Faktor ermöglicht eine vorteilhafte strukturelle Festigkeit für die mindestens eine Schnittstelle, insbesondere das jeweiligen Verbindungselement, um die radiale Verbiegung des Verbindungselements zu minimieren. Der Innendurchmesser ist kleiner als der Außendurchmesser. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das Ausdehnungselement ermöglicht, dass sich das Verbindungselement radial ausdehnt, während der beschriebene Faktor die radiale Verbiegung des Verbindungselements minimiert und während das Außengewinde eine sichere und wiederholbare Verbindung auf eine besonders einfache Weise gewährleistet.

Gemäß einer vorteilhaften Ausgestaltung der Erfindung wird ein Verteiler bereitgestellt, wobei die mindestens eine Schnittstelle, insbesondere das jeweilige Verbindungselement, eine innere Abschrägung am freien Ende einer Innenseite der mindestens einen Schnittstelle, insbesondere des jeweiligen Verbindungselements, aufweist, wobei die Abschrägung einen Abschrägungswinkel von 40° bis 70° und einen Referenzdurchmesser aufweist, wobei für das Verhältnis des Referenzdurchmessers zum Außendurchmesser der mindestens einen Schnittstelle, insbesondere des jeweiligen Verbindungselements und/oder des jeweiligen Außengewindes, ein Faktor von 0,4 bis 0,7 gilt. Die Ausdehnung und/oder Verbiegung des Verbindungselements wird typischerweise durch das Einschieben eines Rohres in die Schnittstelle verursacht. Die Schnittstelle umfasst vorzugsweise eine innere Abschrägung, um das Rohr zu führen und/oder für eine kleine Kontaktfläche zwischen dem Rohr und der Schnittstelle zu sorgen, um eine gute Abdichtung zu gewährleisten. Unter dem Abschrägungswinkel ist vorzugsweise der Winkel zwischen gegenüberliegenden Seiten der Abschrägung in einer Querschnittsansicht des Verbindungselements zu verstehen. Vorzugsweise beträgt der Abschrägungswinkel 60°. Unter dem Referenzdurchmesser ist vorzugsweise ein Durchmesser der Abschrägung an einer gegebenen Position und/oder am freien Ende der jeweiligen Schnittstelle zu verstehen. Der Referenzdurchmesser ist kleiner als der Außendurchmesser der mindestens einen Schnittstelle, insbesondere des jeweiligen Verbindungselements und/oder des jeweiligen Außengewindes. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das Ausdehnungselement ermöglicht, dass sich das Verbindungselement radial ausdehnt, während das Außengewinde eine sichere und wiederholbare Verbindung auf eine besonders einfache Weise gewährleistet.

Gemäß einer vorteilhaften Ausgestaltung der Erfindung wird ein Verteiler bereitgestellt, wobei der Verteiler wenigstens teilweise aus Stahl, insbesondere austenitischem Edelstahl, hergestellt ist und/oder der Verteiler wenigstens teilweise durch ein Schmiedeverfahren, ein Gießverfahren, ein Bearbeitungsverfahren, ein 3D-Druckverfahren und/oder ein Druckgussverfahren hergestellt ist. Die Wahl von austenitischem Edelstahl für den Verteiler, insbesondere für den Hauptkörper, ist besonders vorteilhaft für die Verwendung des Verteilers mit einem H2-Hochdrucksystem, da austenitischer Edelstahl eine hohe Beständigkeit gegen Wasserstoffversprödung aufweist. Zu den bevorzugten Verfahren zur Herstellung des Verteilers gehören ein Bearbeitungsverfahren in Kombination mit einem Schmiedeverfahren, einem Gießverfahren oder 3D-Druck, um die Produktionskosten zu senken, die Qualität des Verteilers zu erhöhen und/oder einen einfachen und schnellen Produktionszyklus zu ermöglichen. Der auf diese Weise gestaltete Verteiler ist besonders vorteilhaft, da der Verteiler und sein Material eine vorteilhafte Verbindung mit einer Betankungsinfrastruktur und/oder dem H2-Hochdrucksystem durch die mindestens eine radiale und/oder axiale Schnittstelle ermöglichen, wobei das Ausdehnungselement ermöglicht, dass sich das Verbindungselement radial ausdehnt, während das Außengewinde eine sichere und wiederholbare Verbindung auf eine besonders einfache Weise gewährleistet.

Gemäß einer vorteilhaften Ausgestaltung der Erfindung wird ein Verteiler bereitgestellt, wobei das mindestens eine Verbindungselement eine Überwurfmutter mit Innengewinde zum Aufschrauben der Überwurfmutter auf das Außengewinde des mindestens einen Verbindungselements umfasst, wobei das Ausdehnungselement dazu ausgebildet ist zu ermöglichen, dass sich das Verbindungselement innerhalb der Überwurfmutter radial ausdehnt. Unter der Überwurfmutter ein Gegen-Verbindungselement zu dem Verbindungselement zu verstehen, wobei beide ein kombiniertes Verbindungsmittel bilden. Die Überwurfmutter weist ein Innengewinde auf, das mit dem Außengewinde des Verbindungselements verschraubt wird. Vorzugsweise ist die Überwurfmutter dazu ausgelegt, ein Rohr an der mindestens einen Schnittstelle abzudichten und/oder festzuziehen. Vorzugsweise erzeugt das Ausdehnungselement vorteilhafte Zwischenräume zwischen dem Innengewinde der Überwurfmutter und dem Außengewinde des Verbindungselements, um zu ermöglichen, dass sich das Verbindungselement innerhalb der Überwurfmutter radial ausdehnt, wenn ein Rohr in das Verbindungselement eingeschoben wird. Der auf diese Weise gestaltete Verteiler ist besonders vorteilhaft, da der Verteiler eine vorteilhafte Verbindung mit einer Betankungsinfrastruktur und/oder dem H2-Hochdrucksystem durch die mindestens eine radiale und/oder axiale Schnittstelle ermöglicht, wobei das Ausdehnungselement ermöglicht, dass sich das Verbindungselement bezüglich und/oder innerhalb der Überwurfmutter radial ausdehnt, während das Außengewinde sowie das Innengewinde der Überwurfmutter eine sichere und wiederholbare Verbindung auf eine besonders einfache Weise gewährleisten.

Gemäß dem zweiten Aspekt der Erfindung offenbart die Erfindung ein H2-Hochdrucksystem. Das H2-Hochdrucksystem umfasst mindestens einen Verteiler gemäß dem ersten Aspekt. Das beschriebene H2-Hochdrucksystem weist alle Vorteile auf, die bereits für den Verteiler gemäß dem ersten Aspekt der Erfindung beschrieben wurden. Der Verteiler und das H2-Hochdrucksystem sind vorzugsweise durch mindestens eine der radialen und/oder axialen Schnittstellen aneinander befestigt.

Gemäß dem dritten Aspekt der Erfindung offenbart die Erfindung ein Verfahren zur Herstellung eines Verteilers für ein H2-Hochdrucksystem. Das Verfahren umfasst:
- Bereitstellen eines Verteilers mit einer Anzahl von radialen und/oder axialen Schnittstellen zum Verbinden des Verteilers mit einer Betankungsinfrastruktur und/oder dem H2-Hochdrucksystem,
- Schneiden und/oder Formen eines Außengewindes auf einem Verbindungselement wenigstens einer der Anzahl von Schnittstellen,
- Entfernen mindestens des ersten Gewindeganges des jeweiligen Außengewindes, um ein Ausdehnungselement zu erzeugen, um zu ermöglichen, dass sich das Verbindungselement radial ausdehnt.

Sofern nicht ausdrücklich anders angegeben, können die oben und im Folgenden beschriebenen Verfahrensschritte einzeln, zusammen, einmal, mehrmals, parallel und/oder nacheinander in beliebiger Reihenfolge ausgeführt werden. Eine Bezeichnung wie zum Beispiel "erster Verfahrensschritt" und "zweiter Verfahrensschritt" erfordert keine chronologische Reihenfolge und/oder Priorisierung. Eine bevorzugte Reihenfolge der Verfahrensschritte sieht vor, dass die Verfahrensschritte in der aufgeführten Reihenfolge ausgeführt werden.

Vorzugsweise ist der Verteiler gemäß dem ersten Aspekt gestaltet. Dadurch bietet das Verfahren alle Vorteile, die bereits für den Verteiler gemäß dem ersten Aspekt der Erfindung beschrieben wurden. Vorzugsweise ist der Verteiler wenigstens teilweise aus austenitischem Edelstahl konstruiert und/oder hergestellt.

Nachfolgend werden ein Verteiler für ein H2-Hochdrucksystem, ein H2-Hochdrucksystem und ein Verfahren gemäß der Erfindung unter Bezugnahme auf Figuren näher erläutert. Die Figuren zeigen schematisch:
- Figur 1: einen Verteiler eines H2-Hochdrucksystems in einer seitlichen Schnittansicht,
- Figur 2: eine Gestaltung einer Schnittstelle eines Verteilers in einer seitlichen Schnittansicht, und
- Figur 3: ein Verfahren gemäß der Erfindung in einem Flussdiagramm.

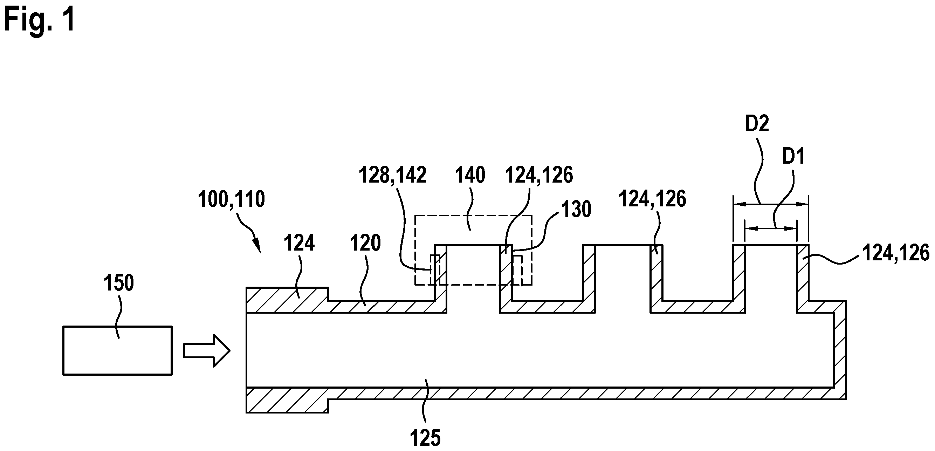

Merkmale mit derselben Funktion bzw. demselben Wirkprinzip sind in den Figuren 1 bis 3 jeweils mit denselben Bezugszeichen versehen.

In Fig. 1 ist eine seitliche Schnittansicht eines Verteilers 110 eines H2-Hochdrucksystems 100 dargestellt. Der Verteiler 110 umfasst einen Hauptkörper 120 mit drei radialen Schnittstellen 124 und einer axialen Schnittstelle 124 zum Verbinden des Verteilers 110 mit einer Betankungsinfrastruktur 150 und dem H2-Hochdrucksystem 100. Die mehreren Schnittstellen 124 sind miteinander verbunden, um Fluid über eine Hauptbohrung 125 entlang des Hauptkörpers 120 zu verteilen, wobei die drei radialen Schnittstellen 124 jeweils ein Verbindungselement 126 zum Verbinden der betreffenden Schnittstelle 124 mit dem H2-Hochdrucksystem 100 umfassen. Die Verbindungselemente 126 umfassen jeweils ein Außengewinde 128 und ein Ausdehnungselement 130, um zu ermöglichen, dass sich das Verbindungselement 126 radial ausdehnt. Zur besseren Klarheit ist nur ein Ausdehnungselement 130 dargestellt. Die Ausdehnungselemente 130 sind an einem freien Ende der Schnittstellen 124 angeordnet. Die Ausdehnungselemente 130 sind als zylindrischer Vorsprung von dem jeweiligen Außengewinde 128 gestaltet, durch Wegschneiden der ersten Gewindegänge des Außengewindes 128. Die Ausdehnungselemente 130 sind einstückig mit den jeweiligen Schnittstellen 124 und dem Verteiler 110 ausgebildet. Die drei radialen Schnittstellen 124 weisen einen Innendurchmesser D1 und einen Außendurchmesser D2 auf, wobei für das Verhältnis des Innendurchmessers D1 zum Außendurchmesser D2 ein Faktor von 0,20 bis 0,5 gilt. Die Verbindungselemente 126 umfassen jeweils eine Überwurfmutter 140 mit Innengewinde 142 zum Aufschrauben der Überwurfmutter 140 auf das Außengewinde 128 des jeweiligen Verbindungselements 126. Es ist nur eine der Überwurfmuttern 140 dargestellt. Die Ausdehnungselemente 130 sind dazu ausgebildet zu ermöglichen, dass sich das jeweilige Verbindungselement 126 innerhalb der Überwurfmutter 140 radial ausdehnt.

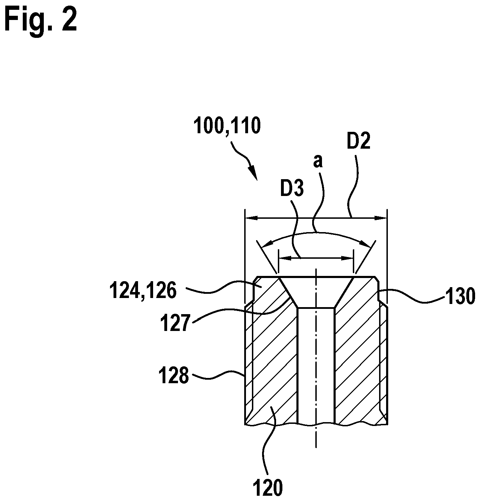

In Fig. 2 ist eine seitliche Schnittansicht einer Schnittstelle 124 eines erfindungsgemäßen Verteilers 100 dargestellt. Die Schnittstelle 124 umfasst ein Verbindungselement 126 zum Verbinden der betreffenden Schnittstelle 124 mit dem H2-Hochdrucksystem 100. Das Verbindungselement 126 umfasst ein Außengewinde 128 und ein Ausdehnungselement 130, um zu ermöglichen, dass sich das Verbindungselement 126 radial ausdehnt. Das Ausdehnungselement 130 ist an einem freien Ende der Schnittstelle 124 angeordnet. Das Ausdehnungselement 130 ist als zylindrischer Vorsprung von der Schnittstelle 124 gestaltet, durch Wegschneiden der ersten Gewindegänge des Außengewindes 128. Das Ausdehnungselement 130 ist einstückig mit der jeweiligen Schnittstelle 124 und dem Verteiler 110 ausgebildet. Die Schnittstelle 124, hier das jeweilige Verbindungselement 126, umfasst eine innere Abschrägung 127 am freien Ende einer Innenseite der Schnittstelle 124, hier einer Innenseite des Verbindungselements 126. Die innere Abschrägung weist einen Abschrägungswinkel von 60° und einen Referenzdurchmesser D3 auf, wobei für das Verhältnis des Referenzdurchmessers D3 zum Außendurchmesser D2 ein Faktor von 0,4 bis 0,7 gilt.

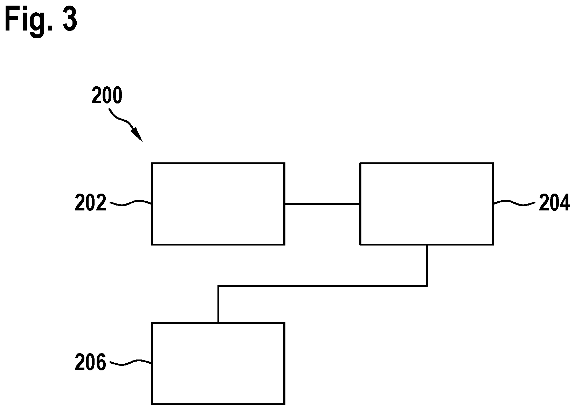

In Fig. 3 ist ein Flussdiagramm eines erfindungsgemäßen Verfahrens 200 dargestellt. Das Verfahren 200 umfasst einen ersten Schritt des Bereitstellens 202 eines Verteilers 110 mit einer Anzahl von radialen und/oder axialen Schnittstellen 124 zum Verbinden des Verteilers 110 mit einer Betankungsinfrastruktur 150 und/oder dem H2-Hochdrucksystem 100. Das Verfahren 200 umfasst einen weiteren Schritt des Schneidens und/oder Formens 204 eines Außengewindes 128 auf einem Verbindungselement 126 wenigstens einer der Anzahl von Schnittstellen 124. Das Verfahren 200 umfasst einen weiteren Schritt des Entfernens 206 mindestens des ersten Gewindeganges des jeweiligen Außengewindes 128, um ein Ausdehnungselement 130 zu erzeugen, um zu ermöglichen, dass sich das Verbindungselement 126 radial ausdehnt.

## Patentansprüche

1. Verteiler (110) für ein H2-Hochdrucksystem (100), wobei der Verteiler (110) einen Hauptkörper (120) mit einer Anzahl von radialen und/oder axialen Schnittstellen (124) zum Verbinden des Verteilers (110) mit einer Betankungsinfrastruktur (150) und/oder dem H2-Hochdrucksystem (100) umfasst, wobei die mehreren Schnittstellen (124) miteinander verbunden sind, um Fluid oder Gas über eine Hauptbohrung (125) entlang des Hauptkörpers (120) zu verteilen, wobei mindestens eine der mehreren Schnittstellen (124) ein Verbindungselement (126) zum Verbinden der betreffenden Schnittstelle (124) mit einer Betankungsinfrastruktur (150) und/oder dem H2-Hochdrucksystem (100) umfasst, wobei das mindestens eine Verbindungselement (126) ein Außengewinde (128) und ein Ausdehnungselement (130), um zu ermöglichen, dass sich das Verbindungselement (126) radial ausdehnt, umfasst.

2. Verteiler (110) nach Anspruch 1,
**dadurch gekennzeichnet,**
**dass** das Ausdehnungselement (130) an einem freien Ende der mindestens einen Schnittstelle (124) und/oder des jeweiligen Außengewindes (128) angeordnet ist.

3. Verteiler (110) nach einem der vorhergehenden Ansprüche,
**dadurch gekennzeichnet,**
**dass** das Ausdehnungselement (130) als zylindrischer Vorsprung von der mindestens einen Schnittstelle (124) und/oder dem jeweiligen Außengewinde (128) gestaltet ist.

4. Verteiler (110) nach einem der vorhergehenden Ansprüche,
**dadurch gekennzeichnet,**
**dass** das Ausdehnungselement (130) durch Wegschneiden mindestens eines ersten Gewindeganges des mindestens einen Außengewindes (128) gestaltet ist.

5. Verteiler (110) nach einem der vorhergehenden Ansprüche,
**dadurch gekennzeichnet,**
**dass** das Ausdehnungselement (130) einstückig mit der mindestens einen Schnittstelle (124) und/oder dem Verteiler (110) ausgebildet ist.

6. Verteiler (110) nach einem der vorhergehenden Ansprüche,
**dadurch gekennzeichnet,**
**dass** die mindestens eine Schnittstelle (124), insbesondere das jeweilige Verbindungselement (126), einen Innendurchmesser (D1) aufweist und die mindestens eine Schnittstelle (124), insbesondere das jeweilige Verbindungselement (126) und/oder das jeweilige Außengewinde (128), einen Außendurchmesser (D2) aufweist, wobei für das Verhältnis des Innendurchmessers (D1) zum Außendurchmesser (D2) ein Faktor von 0,20 bis 0,5 gilt.

7. Verteiler (110) nach Anspruch 6,
**dadurch gekennzeichnet,**
**dass** die mindestens eine Schnittstelle (124), insbesondere das jeweilige Verbindungselement (126), eine innere Abschrägung (127) am freien Ende einer Innenseite der mindestens einen Schnittstelle (124), insbesondere des jeweiligen Verbindungselements (126), aufweist, wobei die Abschrägung einen Abschrägungswinkel (a) von 40° bis 70° und einen Referenzdurchmesser (D3) aufweist, wobei für das Verhältnis des Referenzdurchmessers (D3) zum Außendurchmesser (D2) ein Faktor von 0,4 bis 0,7 gilt.

8. Verteiler (110) nach einem der vorhergehenden Ansprüche,
**dadurch gekennzeichnet,**
**dass** der Verteiler (110) wenigstens teilweise aus Stahl, insbesondere austenitischem Edelstahl, hergestellt ist und/oder der Verteiler (110) wenigstens teilweise durch ein Schmiedeverfahren, ein Gießverfahren, ein Bearbeitungsverfahren, ein 3D-Druckverfahren und/oder ein Druckgussverfahren hergestellt ist.

9. Verteiler (110) nach einem der vorhergehenden Ansprüche,
**dadurch gekennzeichnet,**
**dass** das mindestens eine Verbindungselement (126) eine Überwurfmutter (140) mit Innengewinde (142) zum Aufschrauben der Überwurfmutter (140) auf das Außengewinde (128) des mindestens einen Verbindungselements (126) umfasst, wobei das Ausdehnungselement (140) dazu ausgebildet ist zu ermöglichen, dass sich das Verbindungselement (126) innerhalb der Überwurfmutter (140) radial ausdehnt.

10. H2-Hochdrucksystem (100), welches mindestens einen Verteiler (110) gemäß einem der vorhergehenden Ansprüche umfasst.

11. Verfahren (200) zur Herstellung eines Verteilers (110) für ein H2-Hochdrucksystem (100), wobei das Verfahren (200) umfasst:
- Bereitstellen (202) eines Verteilers (110) mit einer Anzahl von radialen und/oder axialen Schnittstellen (124) zum Verbinden des Verteilers (110) mit einer Betankungsinfrastruktur (150) und/oder dem H2-Hochdrucksystem (100),
- Schneiden (204) eines Außengewindes (128) auf einem Verbindungselement (126) wenigstens einer der Anzahl von Schnittstellen (124),
- Entfernen (206) mindestens des ersten Gewindeganges des jeweiligen Außengewindes (128), um ein Ausdehnungselement (130) zu erzeugen, um zu ermöglichen, dass sich das Verbindungselement (126) radial ausdehnt.
